# EUROPEAN PATENT APPLICATION

(11) **EP 3 075 986 A1**
(43) Date of publication of application: **05.10.2016**
(21) Application number: 16162924.1
(22) Date of filing: 30.03.2016
(51) Int. Cl.: F02C 7/143

(54) **HEAT PIPE TEMPERATURE MANAGEMENT SYSTEM FOR WHEELS AND BUCKETS IN A TURBOMACHINE**

(30) Priority: 02.04.2015 US 201514676925
(71) Applicant: General Electric Company, Schenectady, NY 12345 (US)
(72) Inventor: EKANAYAKE, Sanji, Atlanta, GA Georgia 30339 (US); WICKERT, Thomas Edward, Greenville, SC South Carolina 29615 (US); MESTRONI, Julio Enrique, Atlanta, GA Georgia 30339 (US); SCIPIO, Alston Ilford, Atlanta, GA Georgia 30339 (US)
(74) Representative: Lee, Brenda

(57) **Abstract**

A turbomachine 100 includes a compressor 110 configured to compress air received at an intake portion 202 to form a compressed airflow that exits into an outlet portion 204. A combustor 120 is operably connected with the compressor, and receives the compressed airflow. A turbine 130 is operably connected with the combustor, and receives combustion gas flow from the combustor. The turbine has a plurality of wheels 131 and a plurality of buckets 132, and the turbine receives compressor bleed off air to cool at least one of the wheels. A cooling system 210 is operatively connected to the turbine, and includes a plurality of heat pipes 220 attached to or embedded within at least one of the wheels. The compressor bleed off air is configured to impinge onto at least one of the wheels or the heat pipes. The heat pipes and the compressor bleed off air are configured to cool the wheels.

## Description

### BACKGROUND OF THE INVENTION

Exemplary embodiments of the present invention relate to the art of turbomachines and, more particularly, to a heat pipe temperature management system for wheels and buckets in a turbomachine.

Turbomachines include a compressor operatively connected to a turbine that, in turn, drives another machine such as, a generator. The compressor compresses an incoming airflow that is delivered to a combustor to mix with fuel and be ignited to form high temperature, high pressure combustion products. The high temperature, high pressure combustion products are employed to drive the turbine. Due to the high temperature of the combustion products, gas turbine wheels and buckets require cooling. Known materials have their limits and cooling has allowed wheels and buckets to operate at these high temperatures. This cooling is most commonly accomplished with high pressure air extracted from the compressor. However, negative attributes of compressor high pressure air cooling are a reduction in cycle output capacity and efficiency. As such, there is a need for alternative wheel and bucket cooling methods.

### BRIEF DESCRIPTION OF THE INVENTION

In an aspect of the present invention, a turbomachine includes a compressor configured to compress air received at an intake portion to form a compressed airflow that exits into an outlet portion. A combustor is operably connected with the compressor, and the combustor receives the compressed airflow. A turbine is operably connected with the combustor. The turbine receives combustion gas flow from the combustor. The turbine has a plurality of wheels and a plurality of buckets, and the turbine receives compressor bleed off air to cool at least one of the plurality of wheels. A cooling system is operatively connected to the turbine. The cooling system includes a plurality of heat pipes attached to or embedded within at least one of the plurality of wheels. The compressor bleed off air is configured to impinge onto at least one of the plurality of wheels or the plurality of heat pipes. The plurality of heat pipes and the compressor bleed off air are configured to cool the plurality of wheels.

In another aspect of the present invention, a cooling system for a turbomachine is provided. The turbomachine includes a compressor configured to compress air received at an intake portion to form a compressed airflow. A combustor is operably connected with the compressor, and the combustor receives the compressed airflow. A turbine is operably connected with the combustor, and the turbine receives combustion gas flow from the combustor. The turbine has a plurality of turbine wheels, and the turbine receives compressor bleed off air to cool at least one of the plurality of turbine wheels. The cooling system includes a plurality of heat pipes located substantially within at least one of the plurality of wheels. The plurality of heat pipes extend from an outer radial location of one of the turbine wheels to an inner radial location of one of the turbine wheels. The plurality of heat pipes are configured to conduct heat from the outer radial location to the inner radial location. The compressor bleed off air is configured to impinge onto an inner radial portion of at least one of the turbine wheels, and the compressor bleed off air is directed to a turbine exhaust after impinging on the first stage turbine wheel.

In yet another aspect of the present invention, a method of cooling a turbomachine is provided. The method includes a passing step that passes an airflow through a compressor. The compressor acts on the airflow to create a compressed airflow, and a portion of the compressed airflow is extracted to form a compressor bleed-off airflow. The bleed off airflow is directed at an inner low pressure radius of a turbine wheel. An extracting step, extracts heat from the turbine wheel by thermally conducting the heat to a plurality of heat pipes. The plurality of heat pipes extend from an outer radial location of the turbine wheel to an inner radial location of the turbine wheel. A conducting step conducts heat from the outer radial location to the inner radial location of the turbine wheel via the plurality of heat pipes. A cooling step cools the turbine wheel by directing the compressor bleed off airflow at the inner radial location. A discharging step discharges the compressor bleed off airflow through a turbine exhaust. The method may also include withdrawing the compressor bleed off airflow from a first stage of the compressor, and/or withdrawing the compressor bleed off airflow between a first stage of the compressor and a third stage of the compressor. The plurality of heat pipes are located substantially within a first stage turbine wheel, and the compressor bleed off air is configured to impinge on an inner low pressure radius of the first stage turbine wheel. An optional injecting step injects de-ionized water axially upstream of a first stage turbine wheel.

### BRIEF DESCRIPTION OF THE DRAWINGS

FIG. 1 illustrates a simplified schematic diagram of a turbomachine.
FIG. 2 illustrates a partially schematic, axial sectional view through a portion of the turbomachine, according to an aspect of the present invention.
FIG. 3 illustrates an axial, cross-sectional view of a turbine wheel incorporating heat pipes, according to an aspect of the present invention.
FIG. 4 illustrates a partial circumferential, cross-sectional view of a turbine wheel incorporating heat pipes, according to an aspect of the present invention.
FIG. 5 illustrates a cross sectional shape of a circular or cylindrical heat pipe, according to an aspect of the present invention.
FIG. 6 illustrates a cross sectional shape of an oval heat pipe, according to an aspect of the present invention.
FIG. 7 illustrates a cross sectional shape of a polygonal heat pipe, according to an aspect of the present invention.
FIG. 8 illustrates a cross sectional shape of a rectangular with rounded corners heat pipe, according to an aspect of the present invention.
FIG. 9 illustrates a cross sectional shape of a circular or cylindrical heat pipe with a plurality of fins, according to an aspect of the present invention.
FIG. 10 illustrates a partially schematic, axial sectional view through a portion of the turbomachine having a de-ionized water injection cooling system, according to an aspect of the present invention.
FIG. 11 illustrates a method for cooling a turbomachine, according to an aspect of the present invention.

### DETAILED DESCRIPTION OF THE INVENTION

One or more specific aspects/embodiments of the present invention will be described below. In an effort to provide a concise description of these aspects/embodiments, all features of an actual implementation may not be described in the specification. It should be appreciated that in the development of any such actual implementation, as in any engineering or design project, numerous implementation-specific decisions must be made to achieve the developers' specific goals, such as compliance with machine-related, system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments. Additionally, it should be understood that references to "one embodiment", "one aspect" or "an embodiment" or "an aspect" of the present invention are not intended to be interpreted as excluding the existence of additional embodiments or aspects that also incorporate the recited features.

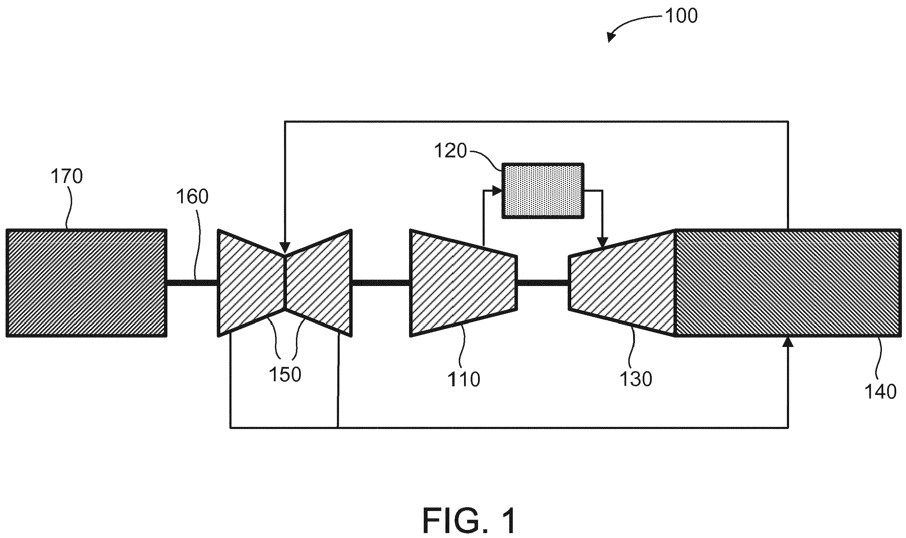

FIG. 1 illustrates a simplified diagram of a turbomachine 100. The turbomachine includes a compressor 110 operably connected to a combustor 120, and the combustor 120 is operably connected to a turbine 130. The turbine's exhaust may be operably connected to a heat recovery steam generator (HRSG) 140. The HRSG 140 generates steam that is directed into a steam turbine 150. In this example, all the individual turbomachines are arranged in a single shaft configuration, and the shaft 160 drives a generator 170. It is to be understood that the term turbomachine includes compressors, turbines or combinations thereof.

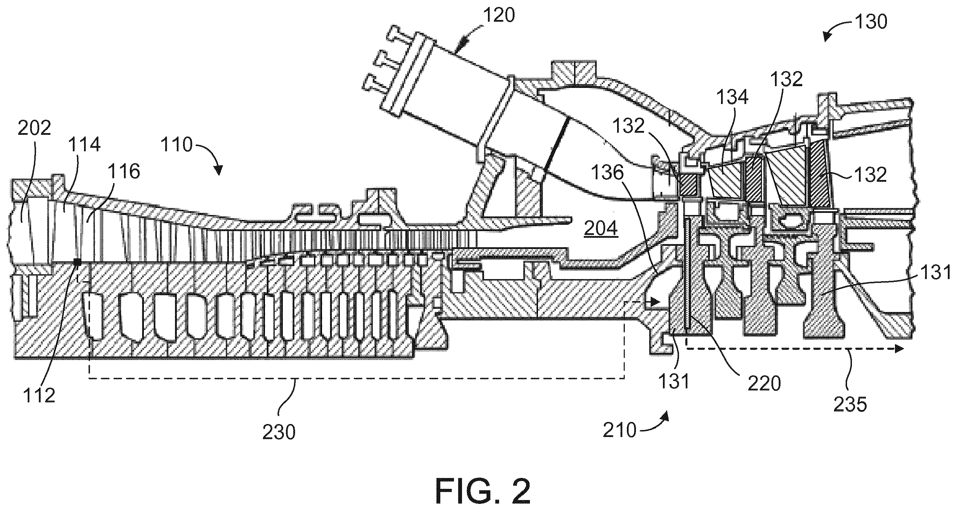

FIG. 2 illustrates a partially schematic, axial sectional view through a portion of the turbomachine, according to an aspect of the present invention. The turbomachine 100 includes a compressor 110 having an intake portion 202 and an outlet portion 204. The compressor compresses air received at the intake portion 202 and forms a compressed airflow that exits from/into the outlet portion 204. The compressor 110 includes a plurality of rotor blades 114 and stator vanes 116. An adjacent pair of blades 114 and vanes 116 makes up a stage of the compressor 110. The combustor 120 is operably connected with the compressor 110, and the combustor 120 receives the compressed airflow. The turbine 130 is operably connected with the combustor 120, and the turbine 130 receives combustion gas flow from the combustor 120. The turbine 130 also includes a plurality of buckets 132 attached to a plurality of wheels 131, and a plurality of stationary nozzles 134. The term "buckets" and "blades" may be used interchangeably, and are understood to refer to rotating elements in a gas turbine.

The turbine 130 of a turbomachine utilizes air extracted from the compressor 110 to cool the hot metal components to a temperature that is tolerable to the component base metal properties. The turbine rotating components (e.g., wheels 131 and buckets 132) are cooled via internal passages while the stationary components (e.g., nozzles 134) are cooled via external passages. Since the external passages are more accessible, a number of methods are known in the art for augmenting the cooling of the stationary components. The rotating components may be cooled by air bled off the compressor. In the past, high pressure and elevated temperature air was bled off from latter compressor stages. For example, compressed air from the last third to last quarter of the compressor stages would be bled off and directed to the turbine. The bled off air passes over the wheels 131 and possibly through the buckets 132, thereby cooling the components via convective heat transfer. Unfortunately, high pressure air extracted from the compressor negatively affects cycle output capacity and machine efficiency. In addition, the high pressure air is at an elevated temperature (with respect to earlier compressor stages) and hotter air is less effective at cooling than cooler air.

This cooling (or temperature management) process can be improved if the compressor bleed off air is reduced in temperature. One way to accomplish this is to extract air from earlier stages in the compressor. Air in the beginning or first few stages is at a lower temperature and pressure than air from the latter compressor stages. However, bleed off air (by itself) from early compressor stages is at a lower pressure than the turbine buckets so will not convey itself in order to cool the turbine components. According to the present invention, a cooling system 210 includes a plurality of heat pipes 220 attached to or embedded/located substantially within at least one of the turbine wheels 131. For example, the heat pipes 220 may be located within a first stage turbine wheel, as shown in FIG. 2. Alternatively, the heat pipes 220 may be located and/or arranged circumferentially around the upstream side of wheel 131 or located in multiple turbine wheel stages. The heat pipes can be affixed to the inside of the rotor barrel cooling chamber 136. The heat pipes 220 extend from an outer radius location of wheel 131 (e.g., near bucket 132) to an inner radius location of the wheel. With this configuration the heat pipes will transfer or conduct heat from the hotter outer radial portions of the wheel 131 to the cooler inner radial portion of the wheel.

The compressor bleed off air 230 is extracted from the compressor 110 at an early stage thereof. For example, the bleed off air 230 could be extracted from a first stage discharge bleed port of the compressor, indicated by 112, or between a first compressor stage and a third compressor stage, or at any suitable compressor stage as desired in the specific application. The advantage with earlier compressor stages, when compared to latter compressor stages, is that the air extracted (bled off) will be at a lower temperature. Lower temperature air is better at cooling due to its increased temperature differential with respect comparatively hot turbine components. The compressor bleed off air 230 may be routed to the rotor barrel cooling chamber 136 and/or the wheel 131 via any suitable duct system (not shown for clarity). For example, the bleed off air duct system could be routed along radially inner portions of the compressor 110 and turbine 130. In the example shown, the compressor bleed off air is configured to impinge onto an inner, low pressure radial/radius portion of the first stage turbine wheel. This radially inner portion of the wheel will be cooled and heat removed by the passing bleed off air. After contact with the wheel 131, the compressor bleed off air can be directed to the turbine exhaust, illustrated by line 235.

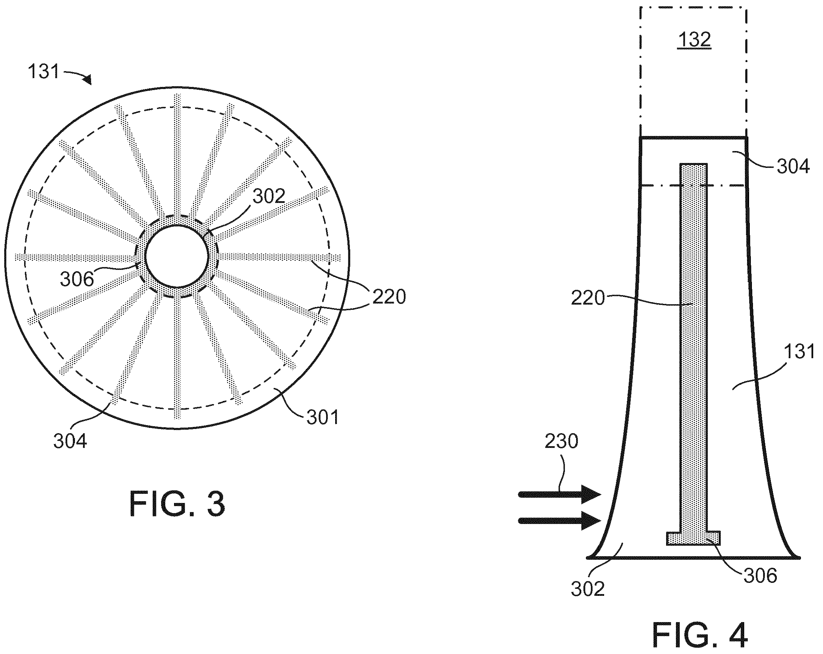

FIG. 3 illustrates an axial, cross-sectional view of a turbine wheel incorporating the heat pipes, according to an aspect of the present invention. The turbine wheel 131 includes a plurality of dovetails circumferentially arranged around the outer radial portion of the wheel. Buckets 132 (not shown) are inserted into these dovetails. The dovetail region is indicated by 301. The heat pipes 220 are configured to extend from an inner radial portion/location 302 of wheel 131 to an outer radial portion/location 304. The inner radial portion may include a circumferential slot 306 that contains a circumferentially disposed heat pipe portion. The heat pipes 220 may include the circumferentially disposed heat pipe portion and the multiple radial branches that extend outward to the outer radial portions of wheel 131. In operation, heat pipes 220 will transfer heat from the hotter outer radial portion 304 of wheel 131 to the inner radial portion 302, thereby cooling the outer portions of wheel 131 and the buckets 132 attached thereto.

FIG. 4 illustrates a partial circumferential, cross-sectional view of the turbine wheel 131 incorporating the heat pipes 220, according to an aspect of the present invention. The bucket 132 is shown in phantom. Heat pipe 220 extends from the outer radial location 304, and may extend past the bottom of the bucket's dovetail, to the inner radial location 302. The bucket 132 is exposed to hot combustion gases, and this heat will be conducted into the wheel 131. Some of this heat can be conducted away from the outer radial location 304 by heat pipes 220, which conduct or thermally transfer the heat to the inner radial location. Low temperature and low pressure compressor bleed air 230 can be directed to impinge on this inner radial location.

The heat pipes 220 include a heat transfer medium which may be a liquid metal, molten salt or Qu material. As examples only, the heat transfer medium may be one or combinations of, aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy. As one specific example, the heat transfer medium may be a molten salt comprising potassium, sodium or cesium. The outer portion of the heat pipes 220 may be made of any suitable material capable of serving the multiple purposes of high thermal conductivity, high strength and high resistance to corrosion from the heat transfer medium.

The heat pipes 220 may also be formed of a "Qu-material" having a very high thermal conductivity. The Qu-material may be in the form of a multi-layer coating provided on the interior surfaces of the heat pipes. For example, a solid state heat transfer medium may be applied to the inner walls in three basic layers. The first two layers are prepared from solutions which are exposed to the inner wall of the heat pipe. Initially the first layer which primarily comprises, in ionic form, various combinations of sodium, beryllium, a metal such as manganese or aluminum, calcium, boron, and a dichromate radical, is absorbed into the inner wall to a depth of 0.008 mm to 0.012 mm. Subsequently, the second layer which primarily comprises, in ionic form, various combinations of cobalt, manganese, beryllium, strontium, rhodium, copper, B-titanium, potassium, boron, calcium, a metal such as aluminum and the dichromate radical, builds on top of the first layer and forms a film having a thickness of 0.008 mm to 0.012 mm over the inner wall of the heat pipe. Finally, the third layer is a powder comprising various combinations of rhodium oxide, potassium dichromate, radium oxide, sodium dichromate, silver dichromate, monocrystalline silicon, beryllium oxide, strontium chromate, boron oxide, B-titanium and a metal dichromate, such as manganese dichromate or aluminum dichromate, which evenly distributes itself across the inner wall. The three layers are applied to the heat pipe and are then heat polarized to form a superconducting heat pipe that transfers thermal energy with little or no net heat loss.

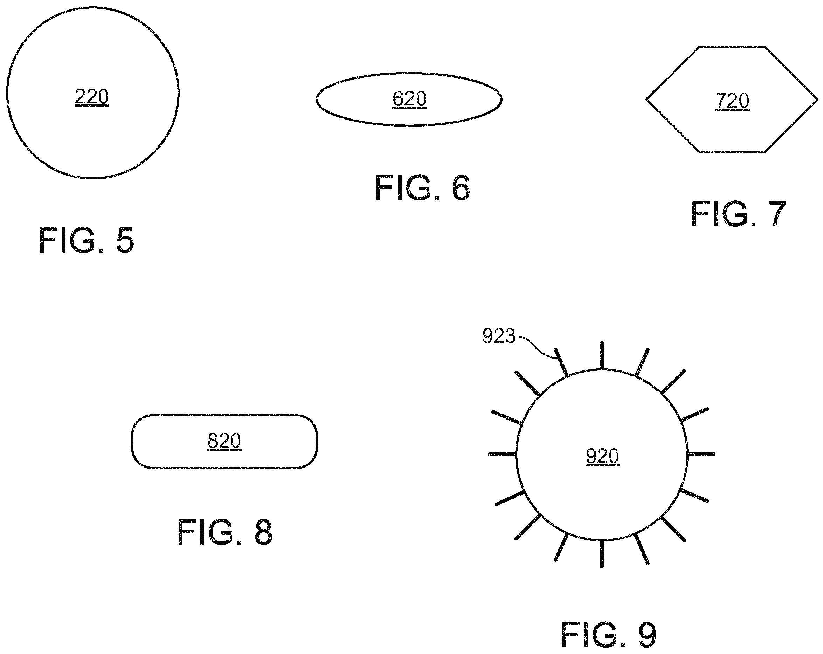

FIG. 5 illustrates a cross sectional shape of a circular or cylindrical heat pipe 220, according to an aspect of the present invention. A cylindrical heat pipe is easy to manufacture and install with conventional tools. FIG. 6 illustrates a cross sectional shape of an oval heat pipe 620, according to an aspect of the present invention. The oval heat pipe 620 may have improved heat transfer characteristics compared to the cylindrical heat pipe. FIG. 7 illustrates a cross sectional shape of a polygonal heat pipe 720, according to an aspect of the present invention. The polygonal shape may include rectangular, hexagonal, square or any other suitable polygonal shape. FIG. 8 illustrates a cross sectional shape of a rectangular with rounded corners heat pipe 820. The rectangular with rounded corners shape may have improved heat transfer characteristics over the oval heat pipe 620, due to increased surface area. FIG. 9 illustrates a cross sectional shape of a circular or cylindrical heat pipe 920 with a plurality of fins 923, according to an aspect of the present invention. The fins 923 are configured to increase the heat transfer capability of the heat pipe, may be arranged axially as shown or radially, and may be comprised of a material having high thermal conductivity, such as copper or aluminum.

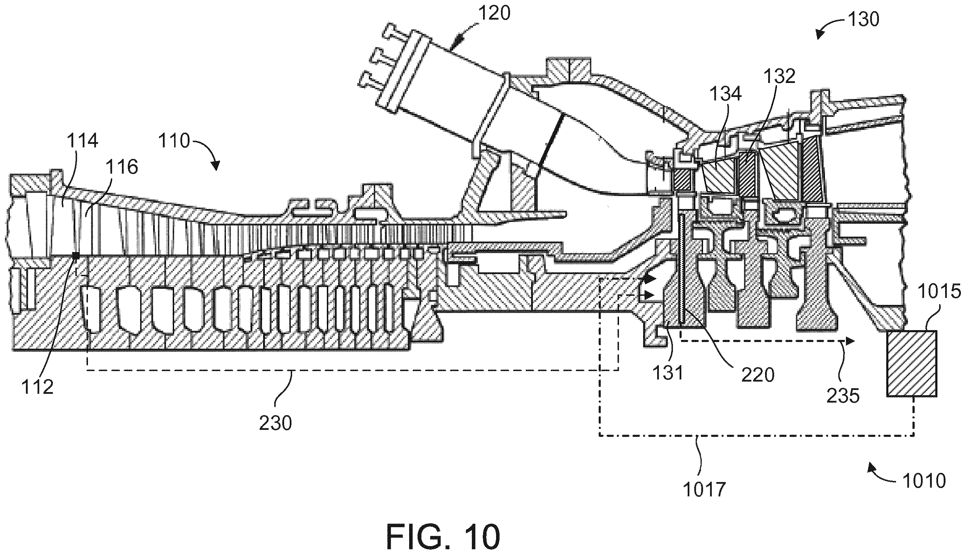

FIG. 10 illustrates a partially schematic, axial sectional view through a portion of the turbomachine, according to an aspect of the present invention. A de-ionized water injection system 1010 is configured to inject de-ionized water 1017 upstream of a first stage turbine wheel 131. The de-ionized water may be supplied through a gland seal assembly 1015. Once injected upstream from the turbine wheel 131, the water will flash to steam in the rotor barrel cooling chamber. The water and steam will flow over the turbine wheel and absorb heat therefrom. The water/steam can then be exhausted or collected and condensed for re-use.

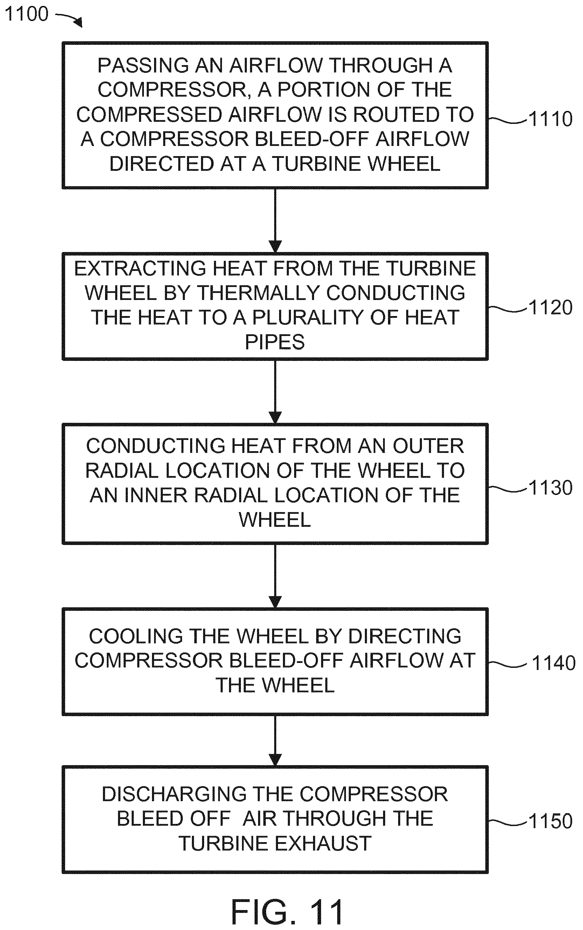

FIG. 11 illustrates a method 1100 for cooling a turbomachine using a combination of low pressure/low temperature compressor bleed off airflow and heat pipes. The method includes a step 1110 of passing an airflow through a compressor 110. A portion of the compressed airflow is routed to a compressor bleed-off airflow 230 directed at a turbine wheel 131. An extracting step 1120 extracts heat from the turbine wheel 131 by thermally conducting heat to a plurality of heat pipes 220. The heat pipes 220 extend from an outer radial location to an inner radial location of the turbine wheel. The heat pipes 220 may include a molten salt heat transfer medium, such as, potassium, sodium, cesium, liquid metal or combinations thereof. A conducting step 1130 conducts heat from the outer radial location 304 to the inner radial location 302 via the heat pipes 220. A cooling step 1140 cools the turbine wheel 131 by directing the compressor bleed off airflow 230 at the inner radial location 302 of the wheel. This may be the upstream surface and lower/inner radial portion of the wheel. The compressor bleed off air absorbs heat and carries this heat away from the wheel. A discharging step 1150 discharges the "hotter" compressor bleed off air through the turbine exhaust. The compressor bleed off air may be withdrawn from the first stage of the compressor, or between a first and third stage of the compressor. The method 1110 may also include an injecting step that injects de-ionized water axially upstream of the first stage turbine wheel.

The cooling and temperature management system of the present invention provides a number of advantages. The turbine section buckets and wheels may have improved lifespans due to the cooler temperatures enabled by the compressor bleed-off airflow and heat pipes. There is also a reduced demand for compressor bleed-off air, which results in improved efficiency.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbomachine comprising:
   a compressor configured to compress air received at an intake portion to form a compressed airflow that exits into an outlet portion;
   a combustor operably connected with the compressor, the combustor receiving the compressed airflow;
   a turbine operably connected with the combustor, the turbine receiving combustion gas flow from the combustor, the turbine having a plurality of wheels and a plurality of buckets, the turbine receiving compressor bleed off air to cool at least one of the plurality of wheels; and
   a cooling system operatively connected to the turbine, the cooling system including a plurality of heat pipes attached to or embedded within at least one of the plurality of wheels, the compressor bleed off air is configured to impinge onto at least one of the plurality of wheels or the plurality of heat pipes, and wherein the plurality of heat pipes and the compressor bleed off air are configured to cool the plurality of wheels.
2. The turbomachine of clause 1, the plurality of heat pipes further comprising a heat transfer medium including one or combinations of:
   aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.
3. The turbomachine of any preceding clause, the plurality of heat pipes further comprising a molten salt heat transfer medium including one or combinations of, potassium, sodium or cesium.
4. The turbomachine of any preceding clause, the compressor bleed off air being withdrawn from a first stage of the compressor.
5. The turbomachine of any preceding clause, the compressor bleed off air being withdrawn from at or between a first stage of the compressor and a third stage of the compressor.
6. The turbomachine of any preceding clause, the plurality of heat pipes located in or on a first stage turbine wheel, and the compressor bleed off air configured to impinge on an inner low pressure radius of the first stage turbine wheel.
7. The turbomachine of any preceding clause, wherein the compressor bleed off air is directed to a turbine exhaust after impinging on the first stage turbine wheel.
8. The turbomachine of any preceding clause, wherein the plurality of heat pipes have a cross-sectional shape, the cross sectional shape generally comprising at least one of:
   circular, oval, rectangular with rounded corners, or polygonal.
9. The turbomachine of any preceding clause, further comprising a de-ionized water injection system configured to inject de-ionized water upstream of a first stage turbine wheel.
10. A cooling system for a turbomachine, the turbomachine including a compressor configured to compress air received at an intake portion to form a compressed airflow, a combustor operably connected with the compressor, the combustor receiving the compressed airflow, a turbine operably connected with the combustor, the turbine receiving combustion gas flow from the combustor, the turbine having a plurality of turbine wheels, the turbine receiving compressor bleed off air to cool at least one of the plurality of turbine wheels, the cooling system comprising:
   a plurality of heat pipes located substantially within at least one of the plurality of wheels, the plurality of heat pipes extending from an outer radial location of one of the turbine wheels to an inner radial location of one of the turbine wheels, the plurality of heat pipes configured to conduct heat from the outer radial location to the inner radial location; and
   wherein the compressor bleed off air is configured to impinge onto an inner radial portion of at least one of the turbine wheels, and wherein the compressor bleed off air is directed to a turbine exhaust after impinging on the first stage turbine wheel.
11. The cooling system of any preceding clause, the plurality of heat pipes further comprising a molten salt heat transfer medium including one or combinations of, potassium, sodium or cesium.
12. The cooling system of any preceding clause, the compressor bleed off air being withdrawn from:
   a first stage of the compressor, or
   between a first stage of the compressor and a third stage of the compressor.
13. The cooling system of any preceding clause, the plurality of heat pipes located substantially within a first stage turbine wheel, and the compressor bleed off air configured to impinge on the first stage turbine wheel.
14. The turbomachine of any preceding clause, further comprising a de-ionized water injection system configured to inject de-ionized water upstream of a first stage turbine wheel.
15. A method of cooling a turbomachine, the method comprising:
   passing an airflow through a compressor, the compressor acting on the airflow to create a compressed airflow, a portion of the compressed airflow is extracted to form a compressor bleed-off airflow, the bleed off airflow is directed at an inner low pressure radius of a turbine wheel;
   extracting heat from the turbine wheel by thermally conducting the heat to a plurality of heat pipes, the plurality of heat pipes extending from an outer radial location of the turbine wheel to an inner radial location of the turbine wheel;
   conducting heat from the outer radial location to the inner radial location of the turbine wheel via the plurality of heat pipes;
   cooling the turbine wheel by directing the compressor bleed off airflow at the inner radial location; and
   discharging the compressor bleed off airflow through a turbine exhaust.
16. The method of any preceding clause, the plurality of heat pipes further comprising a molten salt heat transfer medium including one or combinations of, potassium, sodium or cesium.
17. The method of any preceding clause, further comprising:
   withdrawing the compressor bleed off airflow from a first stage of the compressor.
18. The method of any preceding clause, further comprising:
   withdrawing the compressor bleed off airflow between a first stage of the compressor and a third stage of the compressor.
19. The method of any preceding clause, wherein the plurality of heat pipes are located substantially within a first stage turbine wheel, and the compressor bleed off air is configured to impinge on an inner low pressure radius of the first stage turbine wheel.
20. The method of any preceding clause, further comprising:
   injecting de-ionized water axially upstream of a first stage turbine wheel.

## Claims

1. A turbomachine comprising:
a compressor configured to compress air received at an intake portion to form a compressed airflow that exits into an outlet portion;
a combustor operably connected with the compressor, the combustor receiving the compressed airflow;
a turbine operably connected with the combustor, the turbine receiving combustion gas flow from the combustor, the turbine having a plurality of wheels and a plurality of buckets, the turbine receiving compressor bleed off air to cool at least one of the plurality of wheels; and
a cooling system operatively connected to the turbine, the cooling system including a plurality of heat pipes attached to or embedded within at least one of the plurality of wheels, the compressor bleed off air is configured to impinge onto at least one of the plurality of wheels or the plurality of heat pipes, and wherein the plurality of heat pipes and the compressor bleed off air are configured to cool the plurality of wheels.

2. The turbomachine of claim 1, the plurality of heat pipes further comprising a heat transfer medium including one or combinations of:
aluminum, beryllium, beryllium-fluorine alloy, boron, calcium, cesium, cobalt, lead-bismuth alloy, liquid metal, lithium-chlorine alloy, lithium-fluorine alloy, manganese, manganese-chlorine alloy, mercury, molten salt, potassium, potassium-chlorine alloy, potassium-fluorine alloy, potassium-nitrogen-oxygen alloy, rhodium, rubidium-chlorine alloy, rubidium-fluorine alloy, sodium, sodium-chlorine alloy, sodium-fluorine alloy, sodium-boron-fluorine alloy, sodium nitrogen-oxygen alloy, strontium, tin, zirconium-fluorine alloy.

3. The turbomachine of claim 1, the plurality of heat pipes further comprising a molten salt heat transfer medium including one or combinations of, potassium, sodium or cesium.

4. The turbomachine of claim 3, the compressor bleed off air being withdrawn from a first stage of the compressor.

5. The turbomachine of claim 3, the compressor bleed off air being withdrawn from at or between a first stage of the compressor and a third stage of the compressor.

6. The turbomachine of claim 3, the plurality of heat pipes located in or on a first stage turbine wheel, and the compressor bleed off air configured to impinge on an inner low pressure radius of the first stage turbine wheel.

7. The turbomachine of any preceding claim, wherein the plurality of heat pipes have a cross-sectional shape, the cross sectional shape generally comprising at least one of:
circular, oval, rectangular with rounded corners, or polygonal.

8. The turbomachine of any of claims 3 to 6, further comprising a de-ionized water injection system configured to inject de-ionized water upstream of a first stage turbine wheel.

9. A cooling system for a turbomachine, the turbomachine including a compressor configured to compress air received at an intake portion to form a compressed airflow, a combustor operably connected with the compressor, the combustor receiving the compressed airflow, a turbine operably connected with the combustor, the turbine receiving combustion gas flow from the combustor, the turbine having a plurality of turbine wheels, the turbine receiving compressor bleed off air to cool at least one of the plurality of turbine wheels, the cooling system comprising:
a plurality of heat pipes located substantially within at least one of the plurality of wheels, the plurality of heat pipes extending from an outer radial location of one of the turbine wheels to an inner radial location of one of the turbine wheels, the plurality of heat pipes configured to conduct heat from the outer radial location to the inner radial location; and
wherein the compressor bleed off air is configured to impinge onto an inner radial portion of at least one of the turbine wheels, and wherein the compressor bleed off air is directed to a turbine exhaust after impinging on the first stage turbine wheel.

10. The cooling system of claim 9, the plurality of heat pipes further comprising a molten salt heat transfer medium including one or combinations of, potassium, sodium or cesium.

11. The cooling system of claim 9 or 10, the compressor bleed off air being withdrawn from:
a first stage of the compressor, or
between a first stage of the compressor and a third stage of the compressor.

12. A method of cooling a turbomachine, the method comprising:
passing an airflow through a compressor, the compressor acting on the airflow to create a compressed airflow, a portion of the compressed airflow is extracted to form a compressor bleed-off airflow, the bleed off airflow is directed at an inner low pressure radius of a turbine wheel;
extracting heat from the turbine wheel by thermally conducting the heat to a plurality of heat pipes, the plurality of heat pipes extending from an outer radial location of the turbine wheel to an inner radial location of the turbine wheel;
conducting heat from the outer radial location to the inner radial location of the turbine wheel via the plurality of heat pipes;
cooling the turbine wheel by directing the compressor bleed off airflow at the inner radial location; and
discharging the compressor bleed off airflow through a turbine exhaust.

13. The method of claim 12, the plurality of heat pipes further comprising a molten salt heat transfer medium including one or combinations of, potassium, sodium or cesium.

14. The method of claim 13, further comprising:
withdrawing the compressor bleed off airflow from a first stage of the compressor.

15. The method of claim 13, further comprising:
withdrawing the compressor bleed off airflow between a first stage of the compressor and a third stage of the compressor.
